Europäisches Patentamt

European Patent Office

Office européen des brevets

(11) Numéro de publication: **0 375 484**
**A1**

# (12) DEMANDE DE BREVET EUROPEEN

(21) Numéro de dépôt: 89403280.4

(22) Date de dépôt: 28.11.89

(51) Int. Cl.⁵: **C03B 35/18, F27D 3/02**

(30) Priorité: 08.12.88 FR 8816114

(43) Date de publication de la demande:
27.06.90 Bulletin 90/26

(84) Etats contractants désignés:
**BE CH DE ES FR GB IT LI LU SE**

(71) Demandeur: **SAINT-GOBAIN VITRAGE INTERNATIONAL**
**"Les Miroirs" 18, avenue d'Alsace**
**F-92400 Courbevoie(FR)**
(84) **BE CH ES FR GB IT LI LU SE**

Demandeur: **VEGLA Vereinigte Glaswerke GmbH**
**Viktoriaallee 3-5**
**D-5100 Aachen(DE)**
(84) **DE**

(72) Inventeur: **Vanaschen, Luc**
**Binsterweg 11.3**
**B-4700 Eupen(BE)**
Inventeur: **Radermacher, Herbert**
**Belven 118**
**B-4730 Raeren(BE)**
Inventeur: **Kuster, Hans-Werner**
**Schervierstrasse 20**
**D-5100 Aachen(DE)**
Inventeur: **D'Iribarne, Benoit**
**Am Pannhaus 7**
**D-5100 Aachen(DE)**

(74) Mandataire: **Menes, Catherine et al**
**SAINT-GOBAIN RECHERCHE 39, Quai Lucien Lefranc**
**F-93300 Aubervilliers(FR)**

(54) **Rouleaux de transport pour la zone chaude d'un four de trempe et/ou de bombage de feuilles de verre.**

(57) La demande concerne l'utilisation de carbure de silicium pour la réalisation de rouleaux de transport pour la zone chaude d'un four de trempe et/ou de bombage de feuilles de verre.

# ROULEAUX DE TRANSPORT POUR LA ZONE CHAUDE D'UN FOUR DE TREMPE ET/OU DE BOMBAGE DE FEUILLES DE VERRE

L'invention concerne un rouleau de transport pour la zone chaude de fours horizontaux pour feuilles de verre notamment pour fours de trempe et/ou de bombage, ainsi qu'un four horizontal équipé d'un convoyeur constitué par de tels rouleaux de transport et prévu pour le réchauffage de feuilles de verre jusqu'à la température de trempe et/ou de bombage.

Les rouleaux de transport connus ne sont pas sans défaut que ce soit du point de vue de leur comportement dans la zone de leur logement dans les paliers que celui dans la zone de contact avec les feuilles de verre. Ainsi les rouleaux de transport en dioxyde de silicium peuvent conduire après un certain temps d'utilisation à un marquarge des feuilles de verre dû à de petites bulles présentes dans le corps du rouleau et émergeant à la surface de celui-ci. Pour remédier à cet inconvénient il est connu de munir les rouleaux de transport d'un revêtement ne formant pas de bulles tel que l'oxyde d'aluminium, l'oxyde de zirconium, le silicate de zirconium ou le dioxyde de silicium (DE-A-1 247 567).

Un autre défaut des rouleaux de transport connus vient de ce que leur résistance à l'abrasion est insuffisante pour les types usuels de paliers et/ou d'entraînement représentés et décrits par exemple dans les publications DE-23 19 049 et EP 51 539. Il est certes connu de brevet EP 51 539 de munir autour de leurs points critiques les rouleaux de transport en quartz fritté d'une couche vitreuse résistante aux frottements obtenue au moyen d'une fusion localisée de la surface. Toutefois, dans de nombreux cas, la résistance aux frottements de cette couche est encore insuffisante.

Un inconvénient supplémentaire des rouleaux de transport connus est qu'en raison de leur propriété de résistance mécanique il apparaît un certain bombage transversal élastique voir sous certaines conditions définitif. Ce bombage transversal a un effet défavorable sur la qualité optique des feuilles de verre. Du fait que les rouleaux de transport sont montés sur des supports placés de façon usuelle à l'extérieur du four et ne sont pas soutenus entre les paliers de support, ils doivent présenter un diamètre relativement grand si on veut éviter ces bombages transversaux.

Cette valeur élevée du diamètre des rouleaux de transport a pour conséquence une distance relativement grande entre les rouleaux de transport et par conséquence entre les lignes de soutien successives des feuilles de verre, de telle sorte qu'il en résulte un danger de déformation des feuilles de verre entre ces lignes de soutien par affaissement dû au poids propre des feuilles de verre.

L'invention a pour but un rouleau de transport pour convoyeur de fours horizontaux pour feuilles de verre qui par rapport aux rouleaux connus présente une résistance à l'abrasion mécanique plus élevée, un comportement amélioré vis-à-vis du verre chaud et une moindre tendance à la déformation.

Selon l'invention, il est proposé d'utiliser dans la zone chaude de fours horizontaux pour feuilles de verre des rouleaux de transport exclusivement ou essentiellement en carbure de silicium.

Il est apparu que des rouleaux de transport en carbure de silicium satisfont toutes les exigences ci-dessus relatées. En raison de la grande dureté de ce matériau, les rouleaux de transport selon l'invention ont une résistance à l'abrasion exceptionnellement élevée, de sorte qu'ils peuvent être entraînés directement par friction pendant une période d'utilisation très longue. De plus, le carbure de silicium n'est pas mouillé par le verre fondu et au contraire des matériaux à base d'oxyde ne colle pas au verre ramolli, de sorte que sous cet aspect également les rouleaux selon l'invention présentent un avantage essentiel par rapport aux rouleaux connus de l'art. De plus, la dilatation élastique du carbure de silicium est nettement inférieure à celle de matériaux habituellement utilisés, ce qui diminue le danger d'un bombage transversal. Cela signifie que pour une même longueur de rouleau de transport, le diamètre d'un rouleau en carbure de silicium peut être jusqu'à 50 % plus petit. Par conséquence, les rouleaux de transport selon l'invention peuvent être disposés de façon plus rapprochée les uns des autres, ce qui conduit à une diminution du risque de dégradation de la qualité optique.

Par rapport aux rouleaux de transport connus de l'art, les rouleaux de transport en carbure de silicium présentent toutefois une conductivité thermique accrue de sorte que les pertes thermiques sont plus grandes si les paliers sont positionnés en dehors du four. Mais on peut y remédier si conformément à un développement avantageux de l'invention, on choisit d'opérer avec des paliers sis dans l'enceinte chaude du four et donc avec des rouleaux disposés sur toute leur longueur dans le four. Dans ce but, il est particulièrement avantageux d'utiliser des paliers à gaz tels que ceux décrits dans la demande de brevet EP 88 402447.2. La surface de glissement d'un tel palier à gaz est munie d'orifices d'émission d'un gaz sous pression notamment de l'air qui permet la formation d'un film gazeux entre la coquille support et le rouleau de transport. L'accouplement des rouleaux de transport au dispositif d'entraînement commun est obtenu de préférence de la façon décrite dans la demande de brevet EP 88.402447.2 où il est proposé un accouplement de chaque rouleau de transport à un arbre d'entraînement disposé à l'extérieur du four au moyen d'une tige d'accouplement traversant la paroi du four qui présente un diamètre plus petit que celui du rouleau et qui est accouplée de façon articulée à la fois à l'arbre d'entraînement et au rouleau de transport.

Pour l'invention, on peut utiliser tels quels des tubes en carbure de silicium technique obtenus par des procédés connus de cet art et disponibles dans le commerce. Par carbure de silicium technique, on entend un matériau qui se compose pour l'essentiel de carbure de silicium, mais qui peut contenir de petites quantités d'additifs et/ou d'impuretés qui lui confèrent en règle générale une couleur sombre. Ces tubes sont obtenus à partir de corps cylindriques pleins ou creux, rectifiés au diamètre voulu dont la surface est polie de façon appropriée de sorte qu'ils peuvent être posés directement sur les paliers à gaz.

## Revendications

1. Rouleau de transport pour la zone chaude d'un four horizontal pour feuilles de verre, notamment un four de trempe et/ou de bombage, caractérisé en ce qu'il est constitué exclusivement ou essentiellement en carbure de silicium.

2. Four horizontal avec un convoyeur de transport formé de rouleaux pour le réchauffage de feuilles de verre à la température de bombage et/ou de trempe, **caractérisé en ce que** les rouleaux de transport sont constitués exclusivement ou essentiellement en carbure de silicium et sont montés sur des paliers disposés à l'intérieur du four.

3. Four horizontal selon la revendication 2, **caractérisé en ce que** les rouleaux de transport sont montés sur des paliers à gaz dont les surfaces de glissement sont munies d'orifices d'émission d'un gaz sous pression, notamment de l'air, servant à la formation de films gazeux entre les coquilles de support et les rouleaux.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 636 498  (GAS MACHINERY CO.)<br>* Revendications 1,3 * | 1 | C 03 B  35/18<br>F 27 D   3/02 |
| A |  | 2 |  |
| | --- | | |
| A | US-A-4 260 404  (H.R. GORMAN et al.)<br>* Revendication 1 * | 1 | |
| | --- | | |
| X | US-A-4 553 931  (S. WACHI et al.)<br>* Colonne 1, lignes 32-41 * | 1 | |
| A |  | 2 | |
| | --- | | |
| X | DE-A-2 713 741  (THYSSEN EDELSTAHLWERKE AG)<br>* Revendications 1,3,4 * | 1 | |
| | --- | | |
| A | US-A-3 404 973  (M. NEDELEC)<br>* Revendication 3 * | 1,2 | |
| | --- | | |
| A | DE-A-2 834 576  (BBC AG)<br>* Revendications 1,6 * | 1,2 | |
| | --- | | DOMAINES TECHNIQUES RECHERCHES (Int. Cl.5) |
| X | DE-A- 809 414  (R. GERLACH et al.)<br>* Revendications 1,2 * | 1 | B 65 G  39/07<br>C 03 B  35/16 |
| A |  | 2 | C 03 B  35/18<br>F 27 D   3/02 |
| | --- | | |
| P,A | EP-A-0 310 500  (SAINT-GOBAIN VITRAGE)<br>* Document en entier * | 3 | |
| | --- | | |
| X | EP-A-0 292 953  (K.W. WEBER)<br>* Revendications 1,2; figure 2 * | 1 | |
| A | ---          -/- | 2 | |

Le présent rapport a été établi pour toutes les revendications

| Lieu de la recherche | Date d'achèvement de la recherche | Examinateur |
|---|---|---|
| LA HAYE | 14-03-1990 | STROUD J.G. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A- 679 692 (THE UNITED GLASS BOTTLE MANUFACTURERS LTD) <br> * Figure 5 * <br> ----- | 2 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 14-03-1990 | STROUD J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)